# EUROPÄISCHE PATENTSCHRIFT

(11) **EP 4 244 079 B1**
(45) Veröffentlichungstag und Bekanntmachung des Hinweises auf die Patenterteilung: **23.04.2025**
(21) Anmeldenummer: 21806983.9
(22) Anmeldetag: 01.11.2021
(51) Int. Cl.: B60C 11/03

(54) **FAHRZEUGLUFTREIFEN**
PNEUMATIC VEHICLE TYRE
PNEUMATIQUE DE VÉHICULE

(30) Priorität: 10.11.2020 US 202063111678 P; 25.11.2020 DE 102020214762
(43) Veröffentlichungstag der Anmeldung: 20.09.2023
(73) Patentinhaber: Continental Reifen Deutschland GmbH, 30175 Hannover (DE)
(72) Erfinder: HEINHAUPT, Torsten, 30165 Hannover (DE); BROCKMANN, Jürgen, 30165 Hannover (DE); LAMB, Matthew, 30165 Hannover (DE); BAUER, Claudia, 30165 Hannover (DE)
(74) Vertreter: Continental Corporation
(86) Internationale Anmeldenummer: PCT/DE2021/200166
(87) Internationale Veröffentlichungsnummer: WO 2022/100797

(56) Entgegenhaltungen:
- EP-A1- 2 748 017
- CN-U- 203 974 427
- DE-A1- 4 300 695
- JP-A- 2011 068 324
- US-A1- 2004 134 580
- US-A1- 2019 283 506
- US-A1- 2019 308 463

## Beschreibung

Die Erfindung betrifft einen Fahrzeugluftreifen mit einem Laufstreifen mit zumindest einer, an jeder Seite von je einer Umfangsrille begrenzten Profilblockreihe, welche durch eine Vielzahl von in beide Umfangsrillen einmündenden, in Draufsicht parallel zueinander verlaufenden Querrillen in Profilblöcke gegliedert ist, wobei sich jede Querrille, in Draufsicht betrachtet, aus zwei Rillenabschnitten zusammensetzt, die unter einem stumpfen Winkel von 100° bis 160° aneinander anschließen, wobei in jedem Profilblock eine in beide Rillenabschnitte einer Querrille einmündende, in Draufsicht langgestreckte Sackrille ausgebildet ist, welche mit der Querrille eine in Draufsicht Y-artig verlaufende Rillenkombination bildet und zur Umfangsrichtung unter einem Winkel von 0° bis 60° verläuft.

Ein derartiger Fahrzeugluftreifen ist beispielsweise aus der US 2004/0134580 A1 bekannt. Der Fahrzeugluftreifen weist einen Laufstreifen mit einer im zentralen Laufstreifenbereich befindlichen, an jeder Seite von je einer Umfangsrille begrenzten, mittleren Profilblockreihe auf, welche durch in die Umfangsrillen einmündende Querrillen in Profilblöcke strukturiert ist. Jede Querrille setzt sich, in Draufsicht betrachtet, aus zwei Rillenabschnitten zusammen, welche zur axialen Richtung unter einem Winkel von zirka 20° bis 35° verlaufen. Bei einem Winkel von 20° schließen die Rillenabschnitte miteinander einen Winkel von 140° (180° - 2 x 20° = 140°) ein. In jedem Profilblock ist eine in beide Rillenabschnitte einer Querrille einmündende, in Draufsicht langgestreckte, trichterförmige Sackrille ausgebildet, welche zur Umfangsrichtung unter einem Winkel von 0° verläuft und in axialer Richtung eine Mindestbreite von 7,0 mm bis 15,0 mm aufweist. Der Reifen soll eine gute Schneeperformance aufweisen.

Die EP 2 748 017 B1 offenbart einen Fahrzeugluftreifen mit einem Laufstreifen mit einer den zentralen Laufstreifenbereich bildenden, mittleren Profilblockreihe und zwei schulterseitigen Profilblockreihen. Die mittlere Profilblockreihe ist an jeder Seite durch eine Umfangsrille begrenzt, nimmt zumindest 30% der Breite der Bodenaufstandsfläche des Laufstreifens ein und ist mit in die Umfangsrillen einmündenden, V-förmig verlaufenden ersten Querrillen versehen, welche sich jeweils aus zwei Rillenabschnitten zusammensetzen. Ferner ist die mittlere Profilblockreihe mit zweiten Querrillen versehen, welche jeweils im Bereich zwischen zwei in Umfangsrichtung aufeinanderfolgenden, parallel zueinander verlaufenden Rillenabschnitten der ersten Querrillen verlaufen und in einen bezüglich der Umfangsrichtung gegensinnig geneigten Rillenabschnitt einer ersten Querrille einmünden. Die Rillenabschnitte verlaufen, in Draufsicht betrachtet, zur Umfangsrichtung jeweils unter einem Winkel von 60° bis 85°, sodass die Rillenabschnitte einen Winkel von beispielsweise 120° einschließen. In jedem Profilblock sind in Draufsicht in Umfangsrichtung verlaufende Sackrillen ausgebildet, welche jeweils in einen Rillenabschnitt einer Querrille einmünden. Der Reifen soll gute Fahreigenschaften auf Schnee und Eis aufweisen.

Die DE 43 00 695 A1 offenbart einen Fahrzeugluftreifen mit einem Laufstreifen mit einer den zentralen Laufstreifenbereich bildenden, mittleren Profilblockreihe und zwei schulterseitigen Profilblockreihen. Die mittlere Profilblockreihe ist an jeder Seite durch eine in Draufsicht zick-zack-förmig verlaufende Umfangsrille begrenzt und mit in die Umfangsrillen einmündenden, V-förmig verlaufenden Querrillen versehen, welche sich jeweils aus zwei im Bereich der Reifenäquatorialebene aneinander anschließenden Rillenabschnitten zusammensetzen. Die Rillenabschnitte schließen einen Winkel von vorzugsweise 100° ein. Beim beschriebenen Ausführungsbeispiel sind ferner Sackrillen vorgesehen, welche jeweils in Verlängerung des einen Rillenanschnitts einer Querrille verlaufen. Der Reifen soll ein gutes Aquaplaningverhalten und eine gute Winterperformance aufweisen.

Die US 2019/0283506 A1 offenbart einen Fahrzeugluftreifen mit einem Laufstreifen mit fünf Profilblockreihen. Die halbmittigen Profilblockreihen weisen Profilblöcke auf, welche durch Querrillen voneinander getrennt sind, die sich in Draufsicht aus zwei V-förmig zueinander verlaufenden Rillenabschnitten zusammensetzen. In jedem zweiten halbmittigen Profilblock ist eine Sackrille ausgebildet, welche in Verlängerung des einen Rillenabschnitts der jeweiligen Querrille verläuft. In den halbmittigen Profilblöcken sind ferner durchquerende Einschnitte und einseitig innerhalb der Profilblöcke geschlossen endende Einschnitte vorhanden, wodurch der Reifen eine gute Eis- und Schneeperformance aufweisen soll.

Aus der JP 2011 068 324 A ist ein Fahrzeugluftreifen mit einem Laufstreifen bekannt, welcher in jeder Laufstreifenhälfte eine mittlere Profilblockreihe aufweist, die durch in Draufsicht V-förmig verlaufende Querrillen und in diese einmündende Rillen in Profilblöcke gegliedert ist.

Ferner ist aus der EP 3 300 926 A1 ein Reifen mit einem Laufstreifen bekannt, welcher durch eine zentrale Umfangsrille und zwei schulterseitige Umfangsrillen in zwei schulterseitige Profilblockreihen und zwei mittlere Profilblockreihen gegliedert ist. Die mittleren Profilblockreihen sind durch in die Umfangsrillen einmündende Querrillen in Profilblöcke gegliedert, wobei sich die Querrillen jeweils aus zwei unter einem stumpfen Winkel von 130° bis 150° aneinander anschließenden Rillenabschnitten zusammensetzen, wobei der in die schulterseitige Umfangsrille einmündende Rillenabschnitt kürzer ausgeführt ist als der in die zentreale Umfangsrille einmündende Rillenabschnitt. In jedem Profilblock ist eine zwischen in Umfangsrichtung benachbarten Querrillen in Draufsicht gerade sowie zur Umfangsrichtung unter einem Winkel von 5° bis 15° verlaufend Zusatzrille ausgebildet, welche den jeweiligen Profilblock in im Wesentlichen gleichgroße Blockteile gliedert und sich in Richtung zur schulterseitigen Umfangsrille trichterförmig verbreitert. An den breiteren Enden der Zusatzrillen ist in den Querrillen ferner eine Grundanhebung ausgebildet. Der Reifen weist eine hohe Ausgewogenheit der für eine gute Ganzjahreseignung erwünschten Eigenschaften auf, insbesondere hinsichtlich der Laufstreifensteifigkeit, die für die Handlingeigenschaften verantwortlich ist, des Wasserdrainagevermögens, welches für die Aquaplaningeigenschaften sorgt, sowie die Fahreigenschaften auf Schnee.

Die Profilierung von Laufstreifen mit in Umfangsrillen einmündenden Querrillen ist einerseits vor allem im Hinblick auf die Entwässrung des Laufstreifens (kürzere Wasserverdrängungswege) und andererseits, bedingt durch die zur Verfügung gestellten Querrillenkanten, für die Nass- und Schneegriffeigenschaften günstig. In die Querrille einmündende Rillen tragen ebenfalls zur Entwässrung des Laufstreifens und zu Verbesserung der Nass- und Schneegriffeigenschaften bei. Bei den bisher bekannten Laufstreifenprofilierungen sind diese Eigenschaften jedoch nicht optimal auf die Trockenperformance des Reifens abgestimmt. Insbesondere besteht die Gefahr, dass zu einer Verbesserung der Schneegriffeigenschaften vorgenommene Profilmodifizierungen mit einer Verschlechterung der Trockenperformance und/oder der Entwässerungseigenschaften einhergehen.

Der Erfindung liegt daher die Aufgabe zugrunde, bei einem Fahrzeugluftreifen der eingangs genannten Art unter Aufrechterhaltung einer guten Trockenperformance und guter Entwässerungseigenschaften die Schneegriffeigenschaften beim Auftreten von Seitenführungskräften zu verbessern.

Gelöst wird die gestellte Aufgabe erfindungsgemäß dadurch, dass die Sackrille eine an der Laufstreifenperipherie ermittelte Breite von 1,0 mm bis 6,0 mm aufweist und in Draufsicht derart gebogen verläuft, dass ihr Winkel, unter welchem sie zur Umfangsrichtung verläuft, von ihrem an der Querrille liegenden Rillenende zu ihrem im Innern des Profilblockes liegenden Rillenende um 15° bis 40°, insbesondere um 20° bis 30°, zunimmt.

Beim Fahren auf Schnee wird in den Sackrillen auf besonders effektive Weise Schnee angesammelt und verdichtet, wodurch der Effekt der Schnee-Schnee-Reibung - gegenüber durchgehenden Zusatzrillen - verstärkt und derart die Schneegriffeigenschaften beim Auftreten von Seitenführungskräften verbessert sind. Da die Sackrillen die Profilblöcke nicht durchqueren, bleibt eine für die Trockenperformance vorteilhaft hohe Steifigkeit der Profilrippe erhalten. Durch die Y-artig gestaltete Rillenkombination wird von den Sackrillen aufgenommenes Wasser über die Rillenabschnitte der Querrillen wirkungsvoll in beide "axiale Richtungen", also beide die mittlere Profilrippe begrenzenden Umfangsrillen, abgeleitet, sodass ferner gute Entwässerungseigenschaften beibehalten werden. Der gebogene Verlauf der Sackrille trägt insbesondere zu einer effektiven Schneeverdichtung in der Sackrille beim Fahren auf Schnee bei, wodurch die Schneegriffeigenschaften beim Auftreten von Seitenführungskräften weiter verbessert sind.

Gemäß einer bevorzugten Ausführung beträgt der Winkel, unter welchem die Sackrille zur Umfangsrichtung verläuft, 10° bis 60°, insbesondere 20° bis 50°. Eine derartige Schrägstellung der Sackrille ist günstig für die Wirkung der Rillenkanten der Sackrille bei Belastungen, welche einen in Umfangsrichtung wirkenden Kraftanteil aufweisen, sodass diese Maßnahme zu einer Verbesserung der Schneegriffeigenschaften beiträgt. Ferner treten bei schräggestellter Sackrille unter in Umfangsrichtung wirkender Belastung, insbesondere beim Bremsen, im Vergleich zu einer exakt in Umfangsrichtung verlaufenden Sackrille verstärkt Abstützungseffekte auf, welche für die Blocksteifigkeit und daher für die Trockenperformance günstig sind.

Gemäß einer weiteren bevorzugten Ausführung verläuft die Profilblockreihe in einer der Laufstreifenhälften, wobei die Sackrille ausgehend von der Querrille in Richtung jener der beiden Umfangsrillen verläuft, welche die schulterseitige Umfangsrille ist.

Für die Steifigkeit des Profilblockes ist es von Vorteil, wenn die Sackrille von ihrem im Inneren des Profilblockes liegenden Rillenende - bezogen auf ihre Rillenmittlinie - zur an den Profilbock angrenzenden Querrille, von welcher die Sackrille nicht ausgeht, einen in Umfangsrichtung an der Laufstreifenperipherie ermittelten Abstand von mindestens 3,0 mm und vorzugsweise von höchstens 15,0 mm aufweist. Diese Maßnahme trägt dazu bei, eine für die Trockenperformance vorteilhaft hohe Steifigkeit aufrechtzuerhalten.

In diesem Zusammenhang es ist ferner vorteilhaft, wenn die Sackrille von ihrem im Inneren des Profilblockes liegenden Rillenende - bezogen auf ihre Rillenmittlinie - zur jeweils nächstliegenden Umfangsrille einen in axialer Richtung an der Laufstreifenperipherie ermittelten Abstand von mindestens 3,0 mm und vorzugsweise von höchstens 15,0 mm aufweist.

Gemäß einer weiteren bevorzugten Ausführung nimmt die Breite der Sackrille ausgehend von der Querrille über die gesamte Erstreckung der Sackrille kontinuierlich ab, wobei die Breite der Sackrille an ihrem im Inneren des Profilblockes liegenden Rillenende 30% bis 80%, insbesondere 50% bis 70%, der Breite der Sackrille an der Querrille beträgt. Sackrillen mit einer derart abnehmenden Breite tragen zur Aufrechterhaltung einer hohen Steifigkeit der Profilblöcke und derart zur Aufrechterhaltung der Trockenperformance bei. Gleichzeitig kann sich in einer solchen Sackrille beim Fahren auf einer Schneefahrbahn Schnee besonders gut verdichten, was für die Schneegriffeigenschaften günstig ist.

Gemäß einer weiteren bevorzugten Ausführung weist die Sackrille in radialer Richtung eine Tiefe auf, welche von der Querrille in Richtung zu ihrem im Inneren des Profilblockes liegenden Rillenende abnimmt. Dies trägt zu schnelleren Verdichtung von Schnee in der Sackrille beim Fahren auf einer Schneefahrbahn bei. Ferner ist diese Maßnahme im Hinblick auf die Steifigkeit und die Trockenperformance von Vorteil.

Für die Entwässerungseigenschaften ist es von zusätzlichem Vorteil, wenn die Tiefe der Sackrille an der Querrille mit der Tiefe der Querrille übereinstimmt. Dadurch kann von der Sackrille aufgenommenes Wasser verwirbelungsarm in die Querrille abfließen.

Bevorzugter Weise beträgt die Tiefe der Sackrille an ihrem im Inneren des Profilblockes liegenden Rillenende 2,0 mm bis 3,0 mm.

Gemäß einer weiteren bevorzugten Ausführung ist die Sackrille in radialer Richtung durch einen Rillengrund begrenzt, welcher sich, im entlang der Rillenmittlinie der Sackrille ausgerichteten Längsschnitt betrachtet, aus einem an den Rillengrund der Querrille anschließenden, in der Tiefe der Querrille verlaufenden ersten Grundabschnitt, einem mittleren, zweiten Grundabschnitt und einem dritten Grundabschnitt zusammensetzt, wobei der zweite Grundabschnitt zur radialen Richtung unter einem Winkel von 40° bis 50° und der dritte Grundabschnitt zur radialen Richtung unter einem Winkel von 65° bis 75° verläuft und wobei der dritte Grundabschnitt an den zweiten Grundabschnitt in einer in radialer Richtung ermittelten Tiefe von 50% bis 85%, insbesondere von 65% bis 75%, der Tiefe der Querrille anschließt. Die Grundabschnitte tragen zu einer Stabilisierung des Profilblockes im Bereich der Sackrille bei, sind daher für die Steifigkeit des Profilblockes und somit für die Trockenperformance günstig. Ferner begünstigen die Grundabschnitte die Schneeverdichtung in der Sackrille und tragen derart zu einer weiteren Verbesserung der Schneegriffeigenschaften beim Auftreten von Seitenführungskräften bei.

Eine weitere bevorzugte Ausführung ist dadurch gekennzeichnet, dass die Rillenabschnitte der Querrille, in Draufsicht betrachtet und bezogen auf die Rillenmittellinie, zur axialen Richtung jeweils unter einem Winkel von 10° bis 40°, insbesondere von 20° bis 35°, verlaufen. Dies ist vor allem für die Entwässerungseigenschaften von Vorteil.

Ferner ist es bevorzugt, wenn die Rillenabschnitte der Querrille in Draufsicht derart gebogen verlaufen, dass ihr Winkel zur axialen Richtung - ausgehend von einem am gegenseitigen Anschluss der Rillenabschnitte auf der Rillenmittellinie vorliegenden Knickpunkt - in Richtung zu den Umfangsrillen um 5° bis 25°, insbesondere um 10° bis 20°, zunimmt. Dies begünstigt eine schnelle Wasserableitung in die Umfangsrillen.

Eine weitere bevorzugte Ausführung ist dadurch gekennzeichnet, dass die Winkel der Rillenabschnitte zur axialen Richtung - ermittelt an einem am gegenseitigen Anschluss der Rillenabschnitte auf der Rillenmittellinie vorliegenden Knickpunkt - übereinstimmen oder um höchstens 10° voneinander abweichen.

Bevorzugter Weise beträgt der stumpfe Winkel, unter welchem die Rillenabschnitte der Querrille aneinander anschließen, 110° bis 140°, vorzugsweise 115° bis 135°.

Gemäß einer weiteren bevorzugten Ausführung weisen die Rillenabschnitte der Querrille an ihrem gegenseitigen Anschluss einen Knickpunkt auf der Rillenmittellinie auf, welcher sich innerhalb eines in axialer Richtung von der Profilblockreihenmittellinie ermittelten Abstandes von bis zu 10%, vorzugsweise von bis zu 5%, der an der Laufstreifenperipherie in axialer Richtung ermittelten Breite der mittleren Profilblockreihe befindet. Dies trägt zu einer gleichmäßigen Entwässerung des Profilblockes bei.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt eines Laufstreifens eines Fahrzeugluftreifens mit einer Ausführungsvariante der Erfindung,
Fig. 2 eine vergrößerte Draufsicht auf den Laufstreifen im Bereich eines Profilblockes und
Fig. 3 einen weiter vergrößerten Schnitt entlang der Linie III-III der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks, wobei die Reifen für den Einsatz unter winterlichen Fahrbedingungen vorgesehen sind.

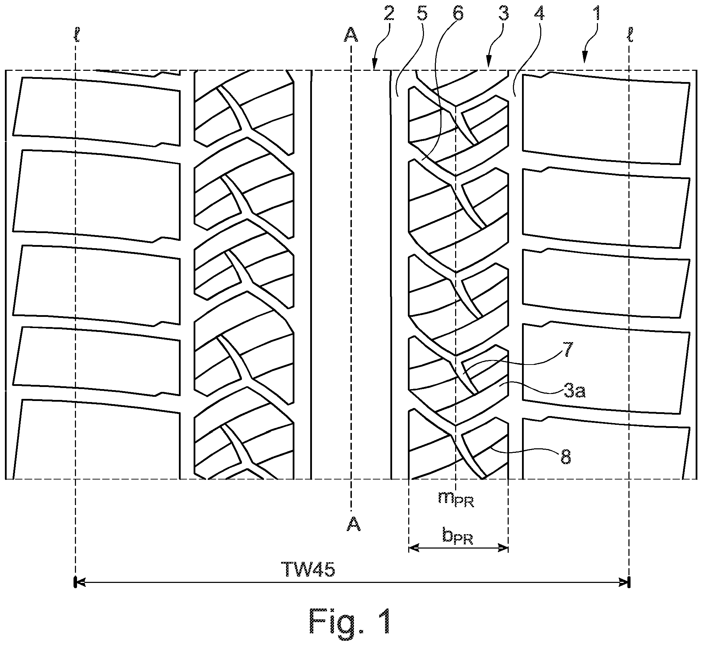

Fig. 1 zeigt eine Draufsicht auf einen Umfangsabschnitt eines Laufstreifens eines Fahrzeugluftreifens. Die Reifenäquatorialebene ist durch eine gestrichelte Linie A-A gekennzeichnet. Der Laufstreifen weist in axialer Richtung eine Laufstreifenbreite TW45 auf, welche zwischen zwei in Umfangsrichtung verlaufenden Linien l ermittelt ist. Jede Linie l erscheint, im Querschnitt des Reifens betrachtet, als auf der Außenkonturlinie (der Einhüllenden) des Reifens liegender Punkt, an welchem eine an die Außenkonturlinie angelegte Tangente mit der radialen Richtung (vertikal Linie) einen Winkel von 45° einschließt. Die Ermittlung der Breite TW 45 erfolgt bei auf einer Normfelge gemäß den E.T.R.T.O.-Standards montiertem Fahrzeugluftreifen bei einem Reifendruck von 0,1 bar und ohne Last.

Der Laufstreifen weist zwei schulterseitige Profilblockreihen 1, eine im Bereich der Reifenäquatorialebene (Linie A-A) verlaufende mittlere Profilrippe 2 und zwei in den unterschiedlichen Laufstreifenhälften verlaufende mittlere Profilblockreihen 3 auf. Die schulterseitigen Profilblockreihen 1 sind durch in Draufsicht gerade verlaufende schulterseitige Umfangsrillen 4 von den mittleren Profilblockreihen 3 getrennt. In Draufsicht gerade verlaufende mittlere Umfangsrillen 5 trennen die mittlere Profilrippe 2 von den mittleren Profilblockreihen 3. Die Umfangsrillen 4, 5 sind in radialer Richtung auf die jeweils vorgesehene Profiltiefe ausgeführt, welche für den bevorzugten Reifentyp üblicherweise 6,5 mm bis 10,0 mm beträgt.

Die schulterseitigen Profilblockreihen 1 und die mittlere Profilrippe 2 sind vereinfacht dargestellt und können in an sich bekannter Weise ausgeführt sein.

Jede mittlere Profilblockreihe 3 weist an der Laufstreifenperipherie in axialer Richtung eine maximale Breite b_{PR} von 15% bis 23%, insbesondere von 17% bis 21%, der Laufstreifenbreite TW45 sowie eine in Draufsicht in Umfangsrichtung verlaufende, die mittlere Profilblockreihe 3 bezogen auf ihre Breite b_{PR} halbierende Profilblockreihenmittellinie m_{PR} auf. Ferner ist jede mittlere Profilblockreihe 3 mit einer Vielzahl von in Draufsicht parallel zueinander und jeweils flach V-förmig verlaufenden, in die entsprechende schulterseitige Umfangsrille 4 und die entsprechende mittlere Umfangsrille 5 einmündenden Querrillen 6 versehen, welche die jeweilige Profilblockreihe 3 in Profilblöcke 3a strukturieren. Von jeder Querrille 6 geht im Bereich ihrer V-Spitze eine in den jeweiligen Profilblock 3a hineinverlaufende und diesem endende Sackrille 7 aus, welche mit der Querrille 6 in Draufsicht eine Y-artig verlaufende Rillenkombination bildet.

Die Y-artigen Rillenkombinationen der in der einen Laufstreifenhälfte befindlichen mittleren Profilblockreihe 3 sind zu den Y-artig verlaufende Rillenkombinationen der in der anderen Laufstreifenhälfte befindlichen mittleren Profilblockreihe 3 in Draufsicht um 180° verdreht. Die weitere Ausgestaltung der Querrillen 6 und der Sackrillen 7 wird nachfolgend anhand einer einzelnen Y-artig ausgestalteten Rillenkombination erläutert.

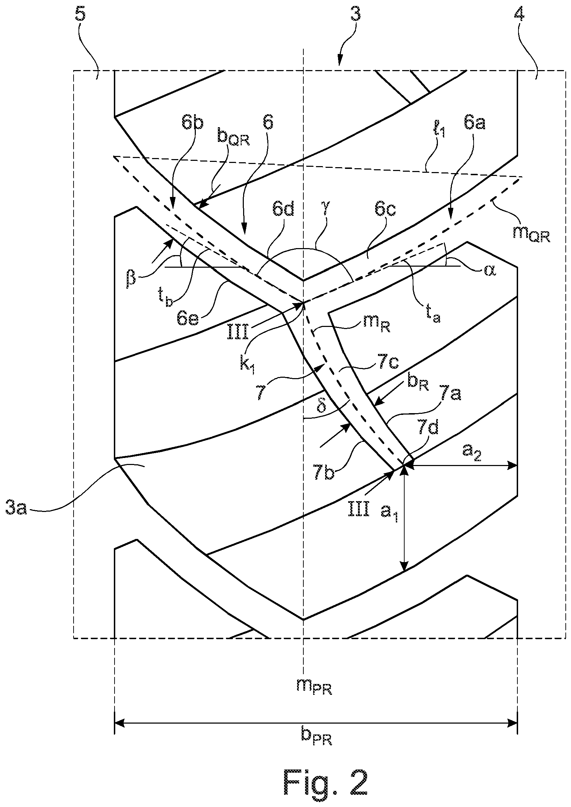

Fig. 2 zeigt eine vergrößerte Draufsicht im Bereich einer Y-artig verlaufenden Rillenkombination aus der in Fig. 1 rechten mittleren Profilblockreihe 3. Bei der Querrille 6 ist die dem Rillenverlauf folgende, bis zu den Umfangsrillen 4, 5 reichende Rillenmittellinie m_{QR} strichliert eingezeichnet, welche - entsprechend des V-förmigen Verlaufs der Querrille 6 - im Bereich der V-Spitze der Querrille 6 einen Knickpunkt kₗ aufweist, der beim gezeigten Ausführungsbeispiel auf der Profilblockreihenmittellinie m_{PR} liegt. Alternativ kann sich der Knickpunkt kₗ innerhalb eines von der Profilblockreihenmittellinie m_{PR} in axialer Richtung ermittelten Abstandes von bis zu 10%, vorzugsweise von bis zu 5%, der Breite b_{PR} der Profilblockreihe 3 befinden, sodass der Knickpunkt kₗ gegenüber der Profilblockreihenmittellinie m_{PR} sowohl in die eine axiale Richtung (in Richtung zur schulterseitigen Umfangsrille 4) als auch die andere axiale Richtung (in Richtung zur mittleren Umfangsrille 5) versetzt sein kann.

Die Querrille 6 setzt sich, in Draufsicht betrachtet, aus einem in die schulterseitige Umfangsrille 4 einmündenden Rillenabschnitt 6a und einem in die mittlere Umfangsrille 5 einmündenden Rillenabschnitt 6b zusammen, wobei die Rillenabschnitte 6a, 6b - bezogen auf die Rillenmittellinie m_{QR} - am Knickpunkt kₗ aneinander anschließen und entsprechend des V-förmigen Verlaufs der Querrille 6 - bezogen auf die axiale Richtung - gegensinnig zueinander geneigt sind. Der Rillenabschnitt 6a verläuft in Draufsicht leicht gebogen sowie zur axialen Richtung - bezogen auf die Rillenmittellinie m_{QR} - unter einem Winkel α von 10° bis 40°, insbesondere von 20° bis 35°, wobei der Winkel α ausgehend vom Knickpunkt kₗ in Richtung zur schulterseitigen Umfangsrille 4 um 5° bis 25°, insbesondere um 10° bis 20°, zunimmt. Der Rillenabschnitt 6b verläuft in Draufsicht ebenfalls leicht gebogen sowie zur axialen Richtung - bezogen auf die Rillenmittellinie m_{QR} - unter einem Winkel β von 10° bis 40°, insbesondere von 20° bis 35°, wobei der Winkel β ausgehend von Knickpunkt kₗ in Richtung zur mittleren Umfangsrille 5 um 5° bis 25°, insbesondere um 10° bis 20°, zunimmt. Bevorzugter Weise stimmen die Winkel α und β am Knickpunkt kₗ überein oder weichen an diesem um höchstens 10° voneinander ab. Die Größen der Winkel α und β sind derart gewählt, dass der Rillenabschnitt 6a und der Rillenabschnitt 6b - bezogen auf die Rillenmittellinie m_{QR} - einen Winkel γ einschließen, welcher die Winkel α und β in Summe auf 180° ergänzt und 100° bis 160°, insbesondere 110° bis 140°, und vorzugsweise 115° bis 135° beträgt.

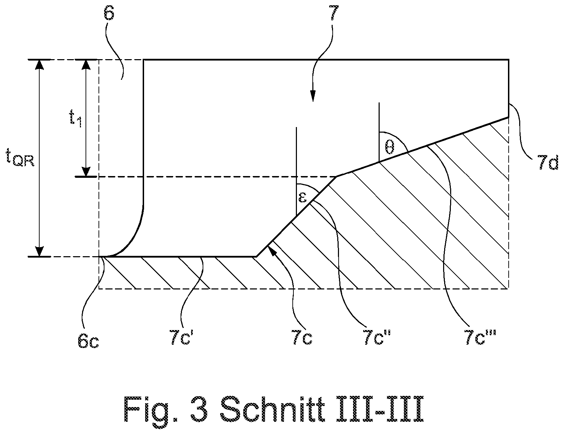

Die Querrille 6 ist durch einen Rillengrund 6c, eine knickinnenseitige Rillenflanke 6d und eine knickaußenseitige Rillenflanke 6e begrenzt, wobei sich die knickinnenseitige Rillenflanke 6d - gegenüber der knickaußenseitigen Rillenflanke 6e - näher zu einer zwischen den Enden der Rillenmittellinie m_{QR} in Draufsicht gerade verlaufenden Linie l₁ befindet. Die Querrille 6 weist in radialer Richtung eine vorzugsweise konstante Tiefe t_{QR} (Fig. 3) von 75% bis 100%, insbesondere von 85% bis 95%, der Profiltiefe sowie eine senkrecht zur Rillenmittellinie m_{QR} ermittelte zumindest im Wesentlichen konstante Breite b_{QR} von 2,0 mm bis 6,0 mm, insbesondere von höchstens 5,0 mm, auf.

Die Sackrille 7 schließt an beide Rillenabschnitte 6a, 6b der Querrille 6 an und erstreckt sich - bezogen auf den Knickpunkt k₁ der Mittellinie m_{QR} der Querrille 6 - in entgegengesetzter Umfangsrichtung zu den Rillenabschnitten 6a, 6b. Die Sackrille 7 schließt daher über die knickaußenseitige Rillenflanke 6e an die Rillenabschnitte 6a, 6b an. Die Sackrille 7 ist, in Draufsicht betrachtet, entlang ihrer dem Rillenverlauf folgenden Rillenmittelinie m_{R} langgestreckt, wobei die in die Querrille 6 fortgeführte Rillenmittelinie m_{R} beim gezeigten Ausführungsbeispiel mit dem Knickpunkt kₗ der Mittellinie m_{QR} der Querrille 6 zusammentrifft. Alternativ kann die in die Querrille 6 fortgeführte Rillenmittelinie m_{R} in einem in axialer Richtung vom Knickpunkt kₗ ermittelten Abstand von bis zu 2,0 mm, insbesondere von bis zu 1,0 mm, auf die Mittellinie m_{QR} der Querrille 6 treffen.

Die Sackrille 7 verläuft beim gezeigten Ausführungsbeispiel in Draufsicht leicht gebogen sowie - bezogen auf die Rillenmittelinie m_{R} - zur Umfangsrichtung unter einem Winkel δ von 10° bis 60°, insbesondere von 20° bis 50°, wobei der Winkel δ ausgehend vom an der Querrille 6 liegenden Rillenende der Sackrille 7 zum im Innern des Profilblockes 3a liegenden Rillenende der Sackrille 7 um 15° bis 40°, insbesondere um 20° bis 30°, zunimmt und wobei die Sackrille 7 ausgehend von der Querrille 6 in Richtung zur schulterseitigen Umfangsrille 4 verläuft. Die Sackrille 7 weist von ihrem im Inneren des Profilblockes 3a liegenden Ende - jeweils bezogen auf die Rillenmittelinie m_{R} - zur den Profilblock 3a begrenzenden Querrille 6, von welcher die Sackrille 7 nicht ausgeht, einen in Umfangsrichtung an der Laufstreifenperipherie ermittelten Abstand a₁ und zur schulterseitigen Umfangsrille 4 einen in axialer Richtung an der Laufstreifenperipherie ermittelten Abstand a₂ auf, wobei die Abstände a₁, a₂ jeweils mindestens 3,0 mm und vorzugsweise maximal 15,0 mm betragen.

Die Sackrille 7 ist durch eine an den Rillenabschnitt 6a der Querrille 6 anschließende Rillenflanke 7a, eine an den Rillenabschnitt 6b der Querrille 6 anschließende Rillenflanke 7b, einen Rillengrund 7c (vergl. Fig. 3) und eine zwischen den Rillenflanken 7a, 7b verlaufende Endflanke 7d begrenzt. Die Rillenflanken 7a, 7b und die Endflanke 7d (vergl. Fig. 3) verlaufen, im Querschnitt betrachtet, in radialer Richtung oder zu dieser unter einem Winkel von insbesondere bis zu 5°. Wie Fig. 3 zeigt, setzt sich der Rillengrund 7c, im entlang der Rillenmittelinie m_{R} ausgerichteten Längsschnitt betrachtet, aus einem an den Rillengrund 6c der Querrille 6 anschließenden, in der Tiefe t_{QR} verlaufenden Grundabschnitt 7c', einem mittleren Grundabschnitt 7c" und einem Grundabschnitt 7c‴ zusammen. Der mittlere Grundabschnitt 7c" verläuft, im erwähnten Längsschnitt betrachtet, zur radialen Richtung unter einem Winkel ε von 40° bis 50°. Der Grundabschnitt 7c‴ schließt in einer in radialer Richtung ermittelten Tiefe t₁ von 50% bis 85%, insbesondere von 65% bis 75%, der Tiefe t_{QR} an den mittleren Grundabschnitt 7c" an und verläuft, im erwähnten Längsschnitt betrachtet, zur radialen Richtung unter einem Winkel θ von 65° bis 75°. Die Sackrille 7 weist in radialer Richtung eine Tiefe auf, welche von der Querrille 6 in Richtung zum im Inneren des Profilblockes 3a liegenden Ende der Sackrille 7 auf insbesondere 2,0 mm bis 3,0 mm abnimmt. Gemäß Fig. 2 weist die Sackrille 7 an der Laufstreifenperipherie eine senkrecht zur Rillenmittellinie m_{R} ermittelte Breite b_{R} von 1,0 mm bis 6,0 mm, insbesondere von 2,0 mm bis 4,5 mm, auf, wobei die Breite b_{R} beim gezeigten Ausführungsbeispiel ausgehend von der Querrille 6 über die Erstreckung der Sackrille 7 kontinuierlich abnimmt. Die Breite b_{R} der Sackrille 7 an ihrer Endflanke 7d beträgt 30% bis 80%, insbesondere 50% bis 70%, der Breite b_{R} der Sackrille 7 an der Querrille 6.

Die erwähnten Winkel α, β, γ, δ, welche den Verlauf der Querrille 6 bzw. der Sackrille 7 beschreiben, sind jeweils relativ zu einer an die Rillenmittellinie m_{QR} bzw. an die Rillenmittellinie m_{R} angelegten Tangente ermittelt. In Fig. 2 ist exemplarisch eine durch den Knickpunkt k₁ verlaufende, an die Rillenmittellinie m_{QR} angelegte Tangente tₐ für den Winkel α und eine durch den Knickpunkt k₁ verlaufende an die Rillenmittellinie m_{QR} angelegte Tangente t_{b} für den Winkel β eingezeichnet. Der Winkel γ ist zwischen der Tangente tₐ und der Tangente t_{b} ermittelt.

Gemäß Fig. 1 sind die Profilblöcke 3a beim gezeigten Ausführungsbeispiel jeweils mit einer Anzahl von in Draufsicht parallel zueinander verlaufenden Einschnitten 8 mit einer Breite von 0,4 mm bis 0,8 mm und einer maximalen Tiefe von 50% bis 100% der Profiltiefe versehen. Ferner weisen die Profilblöcke 3a beim gezeigten Ausführungsbeispiel an den Einmündungen der Querrillen 6 im Bereich der zwischen den Querrillen 6 und den Umfangsrillen 4, 5 vorliegenden spitzen Einschlusswinkel abgeschrägte Eckbereiche auf, welche in bekannter Weise ausgeführt sein können.

Die Erfindung ist auf das beschriebene Ausführungsbeispiel nicht beschränkt.

Insbesondere weist der Laufstreifen zumindest eine mittlere Profilblockreihe 3 auf, wobei die mittlere Profilblockreihe 3 auch im Bereich der Reifenäquatorialebene ausgebildet sein kann. Die Rillenabschnitte 6a, 6b der Querrillen 6 können in Draufsicht jeweils gerade verlaufen. Der Winkel δ, unter welchem die Sackrillen 7 in Draufsicht zur Umfangsrichtung verlaufen, beträgt 0° bis 60°. Die Breite b_{R} und die Tiefe der Sackrille 7 können jeweils konstant ausgeführt sein. Die Umfangsrillen müssen in Draufsicht nicht gerade verlaufen, sondern können in Draufsicht beispielsweise zick-zack-förmig verlaufen.

### Bezugsziffernliste

- 1: schulterseitige Profilblockreihe
- 2: mittlere Profilrippe
- 3: mittlere Profilblockreihe
- 3a: Profilblock
- 4: schulterseitige Umfangsrille
- 5: mittlere Umfangsrille
- 6: Querrille
- 6a: Rillenabschnitt
- 6b: Rillenabschnitt
- 6c: Rillengrund
- 6d: knickinnenseitige Rillenflanke
- 6e: knickaußenseitige Rillenflanke
- 7: Sackrille
- 7a, 7b: Rillenflanke
- 7c: Rillengrund
- 7c', 7c", 7c‴: Grundabschnitt
- 7d: Endflanke
- 8: Einschnitt
- A-A: Linie (Reifenäquatorialebene)
- a₁, a₂: Abstand
- b_{R}, b_{PR}, b_{QR}: Breite
- k₁: Knickpunkt
- l, l₁: Linie
- m_{R}: Rillenmittellinie
- m_{PR}: Profilblockreihenmittellinie
- m_{QR}: Rillenmittellinie
- tₐ, t_{b}: Tangente
- t_{QR}, t₁: Tiefe
- TW45: Laufstreifenbreite
- α, β, γ, δ, ε, θ: Winkel

## Patentansprüche

1. Fahrzeugluftreifen mit einem Laufstreifen mit zumindest einer, an jeder Seite von je einer Umfangsrille (4, 5) begrenzten Profilblockreihe (3), welche durch eine Vielzahl von in beide Umfangsrillen (4, 5) einmündenden, in Draufsicht parallel zueinander verlaufenden Querrillen (6) in Profilblöcke (3a) gegliedert ist, wobei sich jede Querrille (6), in Draufsicht betrachtet, aus zwei Rillenabschnitten (6a, 6b) zusammensetzt, die unter einem stumpfen Winkel (y) von 100° bis 160° aneinander anschließen,
wobei in jedem Profilblock (3a) eine in beide Rillenabschnitte (6a, 6b) einer Querrille (6) einmündende, in Draufsicht langgestreckte Sackrille (7) ausgebildet ist, welche mit der Querrille (6) eine in Draufsicht Y-artig verlaufende Rillenkombination bildet und zur Umfangsrichtung unter einem Winkel (δ) von 0° bis 60° verläuft,
**dadurch gekennzeichnet,**
**dass** die Sackrille (7) eine an der Laufstreifenperipherie ermittelte Breite (b_{R}) von 1,0 mm bis 6,0 mm aufweist und in Draufsicht derart gebogen verläuft, dass ihr Winkel (δ), unter welchem sie zur Umfangsrichtung verläuft, von ihrem an der Querrille (6) liegenden Rillenende zu ihrem im Innern des Profilblockes (3a) liegenden Rillenende um 15° bis 40°, insbesondere um 20° bis 30°, zunimmt.

2. Fahrzeugluftreifen nach Anspruch 1, **dadurch gekennzeichnet, dass** der Winkel (δ), unter welchem die Sackrille (7) zur Umfangsrichtung verläuft, 10° bis 60°, insbesondere 20° bis 50°, beträgt.

3. Fahrzeugluftreifen nach Anspruch 1 oder 2, **dadurch gekennzeichnet, dass** die Profilblockreihe (3) in einer der Laufstreifenhälften verläuft, wobei die Sackrille (7) ausgehend von der Querrille (6) in Richtung jener der beiden Umfangsrillen (4, 5) verläuft, welche die schulterseitige Umfangsrille (4) ist.

4. Fahrzeugluftreifen nach einem der Ansprüche 1 bis 3, **dadurch gekennzeichnet, dass** die Sackrille (7) von ihrem im Inneren des Profilblockes (3a) liegenden Rillenende - bezogen auf ihre Rillenmittlinie (m_{R}) - zur an den Profilbock (3a) angrenzenden Querrille (6), von welcher die Sackrille (7) nicht ausgeht, einen in Umfangsrichtung an der Laufstreifenperipherie ermittelten Abstand (a₁) von mindestens 3,0 mm und vorzugsweise von höchstens 15,0 mm aufweist.

5. Fahrzeugluftreifen nach einem der Ansprüche 1 bis 4, **dadurch gekennzeichnet, dass** die Sackrille (7) von ihrem im Inneren des Profilblockes (3a) liegenden Rillenende - bezogen auf ihre Rillenmittlinie (m_{R}) - zur jeweils nächstliegenden Umfangsrille (4) einen in axialer Richtung an der Laufstreifenperipherie ermittelten Abstand (a₂) von mindestens 3,0 mm und vorzugsweise von höchstens 15,0 mm aufweist.

6. Fahrzeugluftreifen nach einem der Ansprüche 1 bis 5, **dadurch gekennzeichnet, dass** die Breite (b_{R}) der Sackrille (7) ausgehend von der Querrille (6) über die gesamte Erstreckung der Sackrille (7) kontinuierlich abnimmt, wobei die Breite (b_{R}) der Sackrille (7) an ihrem im Inneren des Profilblockes (3a) liegenden Rillenende 30% bis 80%, insbesondere 50% bis 70%, der Breite (b_{R}) der Sackrille (7) an der Querrille (6) beträgt.

7. Fahrzeugluftreifen nach einem der Ansprüche 1 bis 6, **dadurch gekennzeichnet, dass** die Sackrille (7) in radialer Richtung eine Tiefe aufweist, welche von der Querrille (6) in Richtung zu ihrem im Inneren des Profilblockes (3a) liegenden Rillenende abnimmt.

8. Fahrzeugluftreifen nach Anspruch 7, **dadurch gekennzeichnet, dass** die Tiefe der Sackrille (7) an der Querrille (6) mit der Tiefe (t_{QR}) der Querrille (6) übereinstimmt.

9. Fahrzeugluftreifen nach Anspruch 7 oder 8, **dadurch gekennzeichnet, dass** die Tiefe der Sackrille (7) an ihrem im Inneren des Profilblockes (3a) liegenden Rillenende 2,0 mm bis 3,0 mm beträgt.

10. Fahrzeugluftreifen nach einem der Ansprüche 1 bis 9, **dadurch gekennzeichnet, dass** die Sackrille (7) in radialer Richtung durch einen Rillengrund (7c) begrenzt ist, welcher sich, im entlang der Rillenmittlinie (m_{R}) der Sackrille (7) ausgerichteten Längsschnitt betrachtet, aus einem an den Rillengrund (6c) der Querrille (6) anschließenden, in der Tiefe (t_{QR}) der Querrille (6) verlaufenden ersten Grundabschnitt (7c'), einem mittleren, zweiten Grundabschnitt (7c") und einem dritten Grundabschnitt (7c‴) zusammensetzt, wobei der zweite Grundabschnitt (7c") zur radialen Richtung unter einem Winkel (ε) von 40° bis 50° und der dritten Grundabschnitt (7c‴) zur radialen Richtung unter einem Winkel (θ) von 65° bis 75° verläuft und wobei der dritte Grundabschnitt (7c‴) an den zweiten Grundabschnitt (7c") in einer in radialer Richtung ermittelten Tiefe (t₁) von 50% bis 85%, insbesondere von 65% bis 75%, der Tiefe (t_{QR}) der Querrille (6) anschließt.

11. Fahrzeugluftreifen nach einem der Ansprüche 1 bis 10, **dadurch gekennzeichnet, dass** die Rillenabschnitte (6a, 6b) der Querrille (6), in Draufsicht betrachtet und bezogen auf die Rillenmittellinie (m_{QR}), zur axialen Richtung jeweils unter einem Winkel (α, β) von 10° bis 40°, insbesondere von 20° bis 35°, verlaufen.

12. Fahrzeugluftreifen nach Anspruch 11, **dadurch gekennzeichnet, dass** die Rillenabschnitte (6a, 6b) der Querrille (6) in Draufsicht derart gebogen verlaufen, dass ihr Winkel (α, β) zur axialen Richtung - ausgehend von einem am gegenseitigen Anschluss der Rillenabschnitte (6a, 6b) auf der Rillenmittellinie (m_{QR}) vorliegenden Knickpunkt (k₁) - in Richtung zu den Umfangsrillen (4, 5) um 5° bis 25°, insbesondere um 10° bis 20°, zunimmt.

13. Fahrzeugluftreifen nach Anspruch 11 oder 12, **dadurch gekennzeichnet, dass** die Winkel (α, β) der Rillenabschnitte (6a, 6b) zur axialen Richtung - ermittelt an einem am gegenseitigen Anschluss der Rillenabschnitte (6a, 6b) auf der Rillenmittellinie (m_{QR}) vorliegenden Knickpunkt (k₁) - übereinstimmen oder um höchstens 10° voneinander abweichen.

14. Fahrzeugluftreifen nach einem der Ansprüche 1 bis 13, **dadurch gekennzeichnet, dass** der stumpfe Winkel (γ), unter welchem die Rillenabschnitte (6a, 6b) der Querrille (6) aneinander anschließen, 110° bis 140°, vorzugsweise 115° bis 135°, beträgt.

15. Fahrzeugluftreifen nach einem der Ansprüche 1 bis 14, **dadurch gekennzeichnet, dass** die Rillenabschnitte (6a, 6b) der Querrille (6) an ihrem gegenseitigen Anschluss einen Knickpunkt (k₁) auf der Rillenmittellinie (m_{QR}) aufweisen, welcher sich innerhalb eines in axialer Richtung von der Profilblockreihenmittellinie (m_{PR}) ermittelten Abstandes von bis zu 10%, vorzugsweise von bis zu 5%, der an der Laufstreifenperipherie in axialer Richtung ermittelten Breite (b_{PR}) der mittleren Profilblockreihe (3) befindet.

## Claims

1. Pneumatic vehicle tyre having a tread with at least one profile block row (3), which is delimited at each side by a respective circumferential channel (4, 5) and which is divided into profile blocks (3a) by a multiplicity of transverse channels (6) which open into both circumferential channels (4, 5) and which run parallel to one another in plan view, wherein each transverse channel (6), as seen in plan view, is made up of two channel portions (6a, 6b) which adjoin one another at an obtuse angle (γ) of 100° to 160°,
wherein in each profile block (3a) there is formed a blind channel (7) which opens into both channel portions (6a, 6b) of a transverse channel (6) and which is elongate in plan view and which, with the transverse channel (6), forms a channel combination running in a Y shape in plan view and runs at an angle (δ) of 0° to 60° with respect to the circumferential direction,
**characterized**
**in that** the blind channel (7) has a width (b_{R}), determined at the tread periphery, of 1.0 mm to 6.0 mm and, in plan view, runs in a bent manner in such a way that its angle (δ) at which it runs with respect to the circumferential direction increases by 15° to 40°, in particular by 20° to 30°, from its channel end situated at the transverse channel (6) to its channel end situated within the profile block (3a).

2. Pneumatic vehicle tyre according to Claim 1, **characterized in that** the angle (δ) at which the blind channel (7) runs with respect to the circumferential direction is 10° to 60°, in particular 20° to 50°.

3. Pneumatic vehicle tyre according to Claim 1 or 2, **characterized in that** the profile block row (3) runs in one of the tread halves, wherein, starting from the transverse channel (6), the blind channel (7) runs in the direction of that one of the two circumferential channels (4, 5) which is the shoulder-side circumferential channel (4).

4. Pneumatic vehicle tyre according to one of Claims 1 to 3, **characterized in that** - with reference to its channel centre line (m_{R}) - the blind channel (7) has a distance (a₁), determined in the circumferential direction at the tread periphery, of at least 3.0 mm, and preferably of at most 15.0 mm, from its channel end situated within the profile block (3a) to the transverse channel (6), adjoining the profile block (3a), from which the blind channel (7) does not originate.

5. Pneumatic vehicle tyre according to one of Claims 1 to 4, **characterized in that** - with reference to its channel centre line (m_{R}) - the blind channel (7) has a distance (a₂), determined in the axial direction at the tread periphery, of at least 3.0 mm, and preferably of at most 15.0 mm, from its channel end situated within the profile block (3a) to the circumferential channel (4) which is in each case closest.

6. Pneumatic vehicle tyre according to one of Claims 1 to 5, **characterized in that** the width (b_{R}) of the blind channel (7) decreases continuously, starting from the transverse channel (6), over the entire extent of the blind channel (7), wherein the width (b_{R}) of the blind channel (7) at its channel end situated within the profile block (3a) amounts to 30% to 80%, in particular 50% to 70%, of the width (b_{R}) of the blind channel (7) at the transverse channel (6).

7. Pneumatic vehicle tyre according to one of Claims 1 to 6, **characterized in that** the blind channel (7) has a depth in the radial direction which decreases from the transverse channel (6) in the direction of its channel end situated within the profile block (3a).

8. Pneumatic vehicle tyre according to Claim 7, **characterized in that** the depth of the blind channel (7) at the transverse channel (6) corresponds to the depth (t_{QR}) of the transverse channel (6).

9. Pneumatic vehicle tyre according to Claim 7 or 8, **characterized in that** the depth of the blind channel (7) at its channel end situated within the profile block (3a) is 2.0 mm to 3.0 mm.

10. Pneumatic vehicle tyre according to one of Claims 1 to 9, **characterized in that** the blind channel (7) is delimited in the radial direction by a channel base (7c), which, as seen in the longitudinal section aligned along the channel centre line (m_{R}) of the blind channel (7), is made up of a first base portion (7c'), which adjoins the channel base (6c) of the transverse channel (6) and extends in the depth (t_{QR}) of the transverse channel (6), a central, second base portion (7c") and a third base portion (7c‴), wherein the second base portion (7c") runs at an angle (ε) of 40° to 50° with respect to the radial direction and the third base portion (7c‴) runs at an angle (θ) of 65° to 75° with respect to the radial direction, and wherein the third base portion (7c‴) adjoins the second base portion (7c") at a depth (t₁), determined in the radial direction, of 50% to 85%, in particular of 65% to 75%, of the depth (t_{QR}) of the transverse channel (6).

11. Pneumatic vehicle tyre according to one of Claims 1 to 10, **characterized in that**, as seen in plan view and with reference to the channel centre line (m_{QR}), the channel portions (6a, 6b) of the transverse channel (6) each run at an angle (α, β) of 10° to 40°, in particular of 20° to 35°, to the axial direction.

12. Pneumatic vehicle tyre according to Claim 11, **characterized in that** the channel portions (6a, 6b) of the transverse channel (6) are bent, in plan view, in such a way that - starting from an inflection point (k₁) present on the channel centre line (m_{QR}) at the mutual connection of the channel portions (6a, 6b) - their angle (α, β) to the axial direction increases by 5° to 25°, in particular by 10° to 20°, in the direction of the circumferential channels (4, 5).

13. Pneumatic vehicle tyre according to Claim 11 or 12, **characterized in that** the angles (α, β) of the channel portions (6a, 6b) to the axial direction - determined at an inflection point (k₁) present on the channel centre line (m_{QR}) at the mutual connection of the channel portions (6a, 6b) - coincide or deviate from one another by at most 10°.

14. Pneumatic vehicle tyre according to one of Claims 1 to 13, **characterized in that** the obtuse angle (γ) at which the channel portions (6a, 6b) of the transverse channel (6) adjoin one another is 110° to 140°, preferably 115° to 135°.

15. Pneumatic vehicle tyre according to one of Claims 1 to 14, **characterized in that** the channel portions (6a, 6b) of the transverse channel (6) have, at their mutual connection, an inflection point (k₁) on the channel centre line (m_{QR}) which is within a distance, determined in the axial direction from the profile block row centre line (m_{PR}), of up to 10%, preferably up to 5%, of the width (b_{PR}) of the central profile block row (3), determined in the axial direction at the tread periphery.

## Revendications

1. Pneumatique de véhicule avec une bande de roulement avec au moins une rangée de blocs profilés (3) délimitée de chaque côté par une rainure circonférentielle (4, 5), qui est subdivisée par une pluralité de rainures transversales (6) s'étendant parallèlement les unes aux autres en vue de dessus, débouchant dans les deux rainures circonférentielles (4, 5), en blocs profilés (3a), chaque rainure transversale (6), considérée en vue de dessus, se composant de deux sections de rainure (6a, 6b) qui se raccordent l'une à l'autre selon un angle obtus (γ) de 100° à 160°,
dans chaque bloc profilé (3a) étant réalisée une rainure borgne (7) allongée en vue de dessus, débouchant dans les deux sections de rainure (6a, 6b) d'une rainure transversale (6), laquelle forme avec la rainure transversale (6) une combinaison de rainures s'étendant en Y en vue de dessus et s'étend par rapport à la direction circonférentielle selon un angle (δ) de 0° à 60°,
**caractérisé en ce que**
la rainure borgne (7) présente une largeur (b_{R}), déterminée à la périphérie de la bande de roulement, de 1,0 mm à 6,0 mm et s'étend, en vue de dessus, en étant courbée de telle sorte que son angle (δ), selon lequel elle s'étend par rapport à la direction circonférentielle, augmente de 15° à 40°, notamment de 20° à 30°, depuis son extrémité de rainure située au niveau de la rainure transversale (6) jusqu'à son extrémité de rainure située à l'intérieur du bloc profilé (3a).

2. Pneumatique de véhicule selon la revendication 1, **caractérisé en ce que** l'angle (δ) selon lequel la rainure borgne (7) s'étend par rapport à la direction circonférentielle est de 10° à 60°, notamment de 20° à 50°.

3. Pneumatique de véhicule selon la revendication 1 ou 2, **caractérisé en ce que** la rangée de blocs profilés (3) s'étend dans l'une des moitiés de la bande de roulement, la rainure borgne (7) s'étendant à partir de la rainure transversale (6) en direction de celle des deux rainures circonférentielles (4, 5) qui est la rainure circonférentielle côté épaulement (4).

4. Pneumatique de véhicule selon l'une quelconque des revendications 1 à 3, **caractérisé en ce que** la rainure borgne (7) présente, depuis son extrémité de rainure située à l'intérieur du bloc profilé (3a) - par rapport à sa ligne médiane de rainure (m_{R}) - jusqu'à la rainure transversale (6) adjacente au bloc profilé (3a), de laquelle la rainure borgne (7) ne part pas, une distance (a₁) déterminée dans la direction circonférentielle à la périphérie de la bande de roulement d'au moins 3,0 mm et de préférence d'au plus 15,0 mm.

5. Pneumatique de véhicule selon l'une quelconque des revendications 1 à 4, **caractérisé en ce que** la rainure borgne (7) présente, depuis son extrémité de rainure située à l'intérieur du bloc profilé (3a) - par rapport à sa ligne médiane de rainure (m_{R}) - jusqu'à la rainure circonférentielle (4) respectivement la plus proche, une distance (a₂) déterminée dans la direction axiale à la périphérie de la bande de roulement d'au moins 3,0 mm et de préférence d'au plus 15,0 mm.

6. Pneumatique de véhicule selon l'une quelconque des revendications 1 à 5, **caractérisé en ce que** la largeur (b_{R}) de la rainure borgne (7) diminue de manière continue à partir de la rainure transversale (6) sur toute l'étendue de la rainure borgne (7), la largeur (b_{R}) de la rainure borgne (7) à son extrémité de rainure située à l'intérieur du bloc profilé (3a) étant de 30 % à 80 %, notamment de 50 % à 70 %, de la largeur (b_{R}) de la rainure borgne (7) au niveau de la rainure transversale (6).

7. Pneumatique de véhicule selon l'une quelconque des revendications 1 à 6, **caractérisé en ce que** la rainure borgne (7) présente une profondeur dans la direction radiale qui diminue depuis la rainure transversale (6) en direction de son extrémité de rainure située à l'intérieur du bloc profilé (3a).

8. Pneumatique de véhicule selon la revendication 7, **caractérisé en ce que** la profondeur de la rainure borgne (7) au niveau de la rainure transversale (6) coïncide avec la profondeur (t_{QR}) de la rainure transversale (6).

9. Pneumatique de véhicule selon la revendication 7 ou 8, **caractérisé en ce que** la profondeur de la rainure borgne (7) est de 2,0 mm à 3,0 mm à son extrémité de rainure située à l'intérieur du bloc profile (3a).

10. Pneumatique de véhicule selon l'une quelconque des revendications 1 à 9, **caractérisé en ce que** la rainure borgne (7) est délimitée dans la direction radiale par un fond de rainure (7c) qui, considéré en coupe longitudinale orientée le long de la ligne médiane de rainure (m_{R}) de la rainure borgne (7), se compose d'une première section de base (7c') se raccordant au fond de gorge (6c) de la rainure transversale (6), s'étendant dans la profondeur (t_{QR}) de la rainure transversale (6), d'une deuxième section de base médiane (7c") et d'une troisième section de base (7c"'), la deuxième section de base (7c") s'étendant par rapport à la direction radiale selon un angle (ε) de 40° à 50° et la troisième section de base (7c"') s'étendant par rapport à la direction radiale selon un angle (θ) de 65° à 75° et la troisième section de base (7c‴) se raccordant à la deuxième section de base (7c") à une profondeur (t₁) déterminée dans la direction radiale de 50 % à 85 %, notamment de 65 % à 75 %, de la profondeur (t_{QR}) de la rainure transversale (6).

11. Pneumatique de véhicule selon l'une quelconque des revendications 1 à 10, **caractérisé en ce que** les sections de rainure (6a, 6b) de la rainure transversale (6), considérées en vue de dessus et par rapport à la ligne médiane de rainure (m_{QR}), s'étendent chacune par rapport à la direction axiale selon un angle (α, β) de 10° à 40°, notamment de 20° à 35°.

12. Pneumatique de véhicule selon la revendication 11, **caractérisé en ce que** les sections de rainure (6a, 6b) de la rainure transversale (6) s'étendent, en vue de dessus, en étant courbées de telle sorte que leur angle (α, β) par rapport à la direction axiale - en partant d'un point d'inflexion (k₁) présent au niveau du raccordement mutuel des sections de rainure (6a, 6b) sur la ligne médiane de rainure (m_{QR}) - augmente de 5° à 25°, notamment de 10° à 20°, en direction des rainures circonférentielles (4, 5).

13. Pneumatique de véhicule selon la revendication 11 ou 12, **caractérisé en ce que** les angles (α, β) des sections de rainure (6a, 6b) par rapport à la direction axiale - déterminés au niveau d'un point d'inflexion (k₁) présent au niveau du raccordement mutuel des sections de rainure (6a, 6b) sur la ligne médiane de rainure (m_{QR}) - coïncident ou diffèrent d'au plus 10°.

14. Pneumatique de véhicule selon l'une quelconque des revendications 1 à 13, **caractérisé en ce que** l'angle obtus (γ) selon lequel les sections de rainure (6a, 6b) de la rainure transversale (6) se raccordent l'une à l'autre est de 110° à 140°, de préférence de 115° à 135°.

15. Pneumatique de véhicule selon l'une quelconque des revendications 1 à 14, **caractérisé en ce que** les sections de rainure (6a, 6b) de la rainure transversale (6) présentent, au niveau de leur raccordement mutuel, un point d'inflexion (k₁) sur la ligne médiane de rainure (m_{QR}), qui se trouve à l'intérieur d'une distance, déterminée dans la direction axiale à partir de la ligne médiane de la rangée de blocs profilés (m_{PR}), de jusqu'à 10 %, de préférence jusqu'à 5 %, de la largeur (b_{PR}), déterminée dans la direction axiale au niveau de la périphérie de la bande de roulement, de la rangée de blocs profilés médiane (3).
